# EUROPÄISCHE PATENTSCHRIFT

(11) **EP 0 715 289 B1**
(45) Veröffentlichungstag und Bekanntmachung des Hinweises auf die Patenterteilung: **11.09.2002**
(21) Anmeldenummer: 95250277.1
(22) Anmeldetag: 16.11.1995
(51) Int. Cl.: G08G 1/0968

(54) **Verfahren und System zur Zielführung eines Fahrzeugs**
Method and system for guiding a vehicle
Procédé et système pour le guidage d'un véhicule

(30) Priorität: 28.11.1994 DE 4444391; 19.05.1995 DE 19519066
(43) Veröffentlichungstag der Anmeldung: 05.06.1996
(73) Patentinhaber: Vodafone AG, 40213 Düsseldorf (DE)
(72) Erfinder: Schlottbom, Karlheinz, Dipl.-Math., D-40885 Ratingen (DE); Meis, Josef, Dipl.-Math., D-40479 Düsseldorf (DE); van Hauten, Swen, Dipl.-Inform., D-40229 Düsseldorf (DE)
(74) Vertreter: Presting, Hans-Joachim, Dipl.-Ing.

(56) Entgegenhaltungen:
- WO-A-92/10824
- DE-A- 4 139 581
- INGENIEURS DE L'AUTOMOBILE, Nr. 687, 1.März 1994, Seiten 38-40, XP000435035 SODEIKAT M H: "SYSTEME UNIVERSEL D'INFORMATION DU VEHICULE UNIVERSAL VEHICLE INFORMATION SYSTEM"

## Beschreibung

Die Erfindung betrifft ein Verfahren und ein System zur Zielführung eines Fahrzeugs, bei dem mindestens eine Fahrtroute, die von einer Startposition zu einer vorgegebenen Zielposition führt, unter Berücksichtigung aktueller und/oder prognostizierter Verkehrsdaten ermittelt und das Fahrzeug durch eine mitgeführte Zielführungseinrichtung anhand einer mitgeführten digitalisierten Straßenkarte entlang einer der Fahrtrouten zur Zielposition geführt wird.

Ein solches System zur Zielführung eines Fahrzeugs ist in dem Beitrag "Im Kreisverkehr dritte Ausfahrt!" in der Zeitschrift "ADAC motorwelt", Heft 11, 1994, S.7 ff. beschrieben. Bei der Zielführung eines Fahrzeugs wird dabei zunächst die gewünschte Zielposition von Hand eingegeben und anschließend die aktuelle geographische Position durch eine im Fahrzeug installierte Zielführungseinrichtung mittels eines Satelliten-Navigationssystems bestimmt. Die Zielführungseinrichtung bestimmt dann eine Fahrtroute anhand einer digitalen Straßenkarte, die auf einer mitgeführten CD-ROM gespeichert ist. Die CD-ROM enthält digital abgespeichert geographische Daten der gesamten Bundesrepublik Deutschland: alle Autobahnen, Bundes-, Landes- und Kreisstraßen, alle Großstädte mit sämtlichen befahrbaren Straßen und Plätzen, außerdem rund 100 000 kleinere Orte. Während der Zielführung vergleicht die Zielführungseinrichtung laufend die aktuellen Positionsdaten mit den gespeicherten geographischen Daten auf der CD-ROM entlang der ermittelten Fahrtroute und erteilt dem Fahrer entsprechende Fahrhinweise durch eine Stimme aus den Lautsprechern. Zusätzlich zeigt ein Display zur Orientierung des Fahrers eine elektronische Landkarte, auf der sich ein Punkt - das Fahrzeug - langsam auf sein Ziel zubewegt.

Nachteilig ist bei diesem System, daß nur diejenigen Verkehrsdaten berücksichtigt werden, die bei der Herstellung der CD-ROM bekannt waren und mit den geographischen Daten auf der CD-ROM abgespeichert worden sind. Die aktuellen und/oder prognostizierten Verkehrsdaten (z.B. Verkehrsdichten, Umleitungen) für das Gebiet der digitalisierten Landkarte durch einen Verkehrsrechner an die Zielführungseinrichtung zu übermitteln, ist bei diesem Zielführungssystem nicht vorgesehen, da dazu eine sehr große Datenmenge in gewissen sich zyklisch wiederholenden Zeitabständen zu jedem zielgeführten Fahrzeug zu übertragen und im Fahrzeug abzuspeichern wäre, was wiederum mit großem technischen Aufwand und entsprechenden Kosten verbunden wäre.

Gemäß der Veröffentlichung "Système universel d'information du véhicule"" von M.H.Sodeikat im März 1994 ist ein automatisch umschaltendes duales System vorgesehen, bei welchem entweder dynamische von einer Zentrale ermittelte Routenhinweise an einen Benutzer übermittelt werden (offboard-Navigation) oder bei Nicht-Verfügbarkeit des Baken-Systems eine Umschaltung auf eine autarke Routenberechnung mittels einer Karte und Algorithmen im Endgerät selbst (onboard-Navigation) erfolgt. Gemäß der ersten Funktionsweise des Gerätes werden nicht Routen, sondern Routenhinweise an den Benutzer übermittelt, was große zu übertragende Datenmengen erfordert.

Die WO 92/10824 (D2) offenbart, im Fahrzeugendgerät (also nicht in der Zentrale) die Zielrichtung zu berechnen, worauf der Fahrer in diese Zielrichtung bis zur ersten Bake fährt, worauf er dort eine digitalisierte Straßenkarte bis zur übernächsten Bake und einen Routenbaum erhält, worauf das Fahrzeug aus dem von der Bake empfangenen Routenbaum eine Leitvektorkette heraussucht und anzeigt.

Es ist Aufgabe der vorliegenden Erfindung, ein Verfahren und ein System zur Zielführung eines Fahrzeugs anzugeben, bei dem das Fahrzeug zum Ziel geführt wird entlang einer günstigen Fahrtroute, die von einer Startposition zu einer vorgegebenen Zielposition führt, unter Berücksichtigung aktueller und/oder prognostizierter Verkehrsdaten und unter vorgebbaren Randbedingungen, beispielsweise die Fahrtzeit betreffend.

Die Lösung dieser Aufgabe hinsichtlich des Verfahrens ist erfindungsgemäß gekennzeichnet durch die im Patentanspruch 1 angegebenen Merkmale. Durch die kennzeichnenden Merkmale der Unteransprüche 2 bis 14 ist dieses Verfahren in vorteilhafter Weise weiter ausgestaltbar. Ein System zur Durchführung des erfindungsgemäßen Verfahrens weist die Merkmale des Patentanspruchs 15 auf; durch die kennzeichnenden Merkmale der Unteransprüche 16 bis 21 ist dieses System in vorteilhafter Weise weiter ausgestaltbar.

Die Erfindung sieht vor, daß aus dem Fahrzeug Planungsdaten, die mindestens die Startposition und die Zielposition umfassen, an einen externen Verkehrsrechner übertragen werden und der Verkehrsrechner unter vorgebbaren Randbedingungen und unter Berücksichtigung der aktuellen und/oder prognostizierten Verkehrsdaten Fahrtroutendaten mindestens einer Fahrtroute ermittelt und an die Zielführungseinrichtung des Fahrzeugs überträgt. Dabei sind die an den externen Verkehrsrechner übertragenen Planungsdaten vorzugsweise die aktuelle geographische Position und die Zielposition des Fahrzeugs und/oder bereits im Fahrzeug ermittelte Fahrtrouten. aus denen der Verkehrsrechner mindestens eine günstige Fahrtroute beispielsweise mit Hilfe eines Rechenalgorithmus ermittelt.

Hierdurch wird erreicht, daß die sehr großen Datenmengen, nämlich die aktuellen und/oder prognostizierten Verkehrsdaten des entsprechenden Verkehrsraums, nicht an das Fahrzeug übertragen und als Grundlage für eine optimale Routenplanung zwischengespeichert werden müssen. Trotzdem wird das Fahrzeug durch die mitgeführte Zielführungseinrichtung anhand der mitgeführten digitalisierten Straßenkarte entlang einer günstigen Fahrtroute zur Zielposition geführt, wobei die Fahrtroutenbestimmung oder -auswahl unter Berücksichtigung vorgebbarer Randbedingungen erfolgt.

Um auf eine veränderte Verkehrssituation z.B. durch einen Unfall schnell und wirksam reagieren zu können, wird mit der Erfindung vorgeschlagen, daß der Verkehrsrechner bei Eintritt bestimmter Bedingungen, z.B. eines Staus auf einem Streckenabschnitt der Fahrtroute, sofort mindestens eine aktualisierte Fahrtroute zusätzlich an das Fahrzeug überträgt. Zweckmäßigerweise übermittelt das Fahrzeug dazu in gewissen zeitlichen Abständen seine aktuelle Position an den Verkehrsrechner.

Eine noch größere Unabhängikeit der Zielführungseinrichtung im Fahrzeug vom Verkehrsrechner wird dadurch erreicht, daß die Anzahl der aus den Fahrtroutendaten vom Verkehrsrechner zu ermittelnden alternativen Fahrtrouten vom Fahrzeug vorgegeben wird, d.h. daß das Fahrzeug mehrere Fahrtrouten zur selben Zielposition vom Verkehrsrechner ermitteln oder auswählen läßt.

Der Einsatzbereich des Verfahrens läßt sich dadurch verbessern, daß der Verkehrsrechner die Fahrtroute in Abhängigkeit von speziellen vom Fahrzeug vorgebbaren Randbedingungen bestimmt, die an die konkreten Wünsche des Fahrzeugführers dieses Fahrzeugs zum Ausdruck bringen. So kann beispielsweise eine zweite Zielposition an den Verkehrsrechner übertragen werden, damit der Verkehrsrechner eine Fahrtroute bestimmt, die einen Umweg über die zweite Zielposition aufweist.

Zweckmäßigerweise wird vorgeschlagen, daß der Verkehrsrechner mit der Fahrtroute eine im Bereich der Fahrtroute aktualisierte Straßenkarte an das Fahrzeug überträgt, so daß die Zielführungseinrichtung im Bedarfsfall Fahrtroutenkorrekturen unter Berücksichtigung der aktuellen und/oder prognostizierten Verkehrsdaten selbständig vornehmen kann. Diese Möglichkeit wird noch dadurch verbessert, daß die Straßenkarte im aktualisierten Bereich zusammen mit aktuellen und/oder prognostizierten Verkehrsdaten für diesen Bereich übertragen wird. Insbesondere umfassen die aktuellen und/oder prognostizierten Verkehrsdaten die mittlere Geschwindigkeit der Fahrzeuge auf den Straßenabschnitten der Fahrtroute.

Die vom Verkehrsrechner an das Fahrzeug zu übertragenden Fahrtrouten weisen eine besonders geringe Datenmenge auf, wenn die Fahrtrouten als Vektorzug in Form von aufeinanderfolgenden Wegpunkten übermittelt werden.

Es ist weiterhin zweckmäßig, als Randbedingung die Fahrzeit, die das Fahrzeug für die gesamte Fahrtroute benötigt, zu verwenden.

Um jedes Fahrzeug zu jedem beliebigen Zeitpunkt zu erreichen, wird mit der Erfindung vorgeschlagen, daß der Datenaustausch mit dem Verkehrsrechner über ein Funktelefon erfolgt.

Schaltungstechnisch besonders einfach läßt sich die Zielführung im Fahrzeug durch einen Bordcomputer durchführen.

Zur Erreichung einer störungsfreien Zielführung wird weiter vorgeschlagen, daß der Verkehrsrechner mit einem Verkehrsleitsystem verbunden ist, das z.B. die Fahrtrouten der zielgeführten Fahrzeuge bei der Verkehrsleitung berücksichtigt.

Besonders einfach läßt sich die aktuelle geographische Position durch ein Satelliten-Navigations-System im Fahrzeug ermitteln.

Mit besonders geringem technischen Aufwand läßt sich die aktuelle geographische Position durch ein Funkpeilsystem ermitteln.

Zur Durchführung des Verfahrens zur Zielführung eines Fahrzeugs wird ein System vorgeschlagen bestehend aus einer fahrzeuginternen Zielführungseinrichtung mit einer Empfangseinheit für drahtlos übermittelte Informationen zur Erkennung der aktuellen geographischen Position, einer Recheneinheit zur Steuerung der Datenübertragungen, intern innerhalb des Fahrzeugs und extern zum Verkehrsrechner, einer Eingabeeinheit insbesondere zur Eingabe einer Zielposition und einer Ausgabeeinheit insbesondere zur Ausgabe von Wegführungsinformationen, und einem außerhalb des Fahrzeugs angeordneten Verkehrsrechner, der eine digitalisierte Straßenkarte mit den aktuellen und/oder prognostizierten Verkehrsdaten aufweist. Dabei ist die Zielführungseinrichtung zusätzlich mit einer Sende- /Empfangseinrichtung ausgebildet und jederzeit über die Sende- /Empfangseinrichtung drahtlos mit dem Verkehrsrechner datentechnisch verbindbar.

Mit Vorteil wird vorgeschlagen, daß die Empfangseinheit für drahtlos übermittelte Informationen zur Erkennung der aktuellen geographischen Position entweder ein Satelliten-Navigationssystem oder alternativ dazu ein Funkpeilsystem ist. Beide ermöglichen eine Bestimmung der aktuellen geographischen Position mit relativ geringem Aufwand. Die Genauigkeit der Ortsbestimmung läßt sich insbesondere beim Satelliten-Navigationssystem dadurch verbessern, daß die Empfangseinheit zum Empfang von Korrektursignalen eingerichtet ist, mit denen die Genauigkeit der Positionserkennung verbessert werden kann.

Als besonders zweckmäßig hat es sich erwiesen, wenn die Ausgabe- und/oder Eingabeeinheit eine Spracheingabe- und/oder Sprachausgabeeinheit aufweist. Dabei ist es zweckmäßig, wenn die Ausgabeeinheit außerdem ein Display umfaßt und auf dem Display die aktuelle Position mit einer Umgebungskarte anzeigbar ist.

Eine besonders kompakte Ein- und Ausgabeeinheit ergibt sich, wenn die Ausgabeeinheit gleichzeitig als Eingabeeinheit ausgebildet ist, wobei die Eingabe insbesondere der Zielposition durch Markieren oder handschriftliche Eingabe auf dem Display erfolgt.

Die Sende- /Empfangseinrichtung ist wegen des geringen zusätzlichen Aufwandes vorzugsweise als Funktelefon ausgebildet.

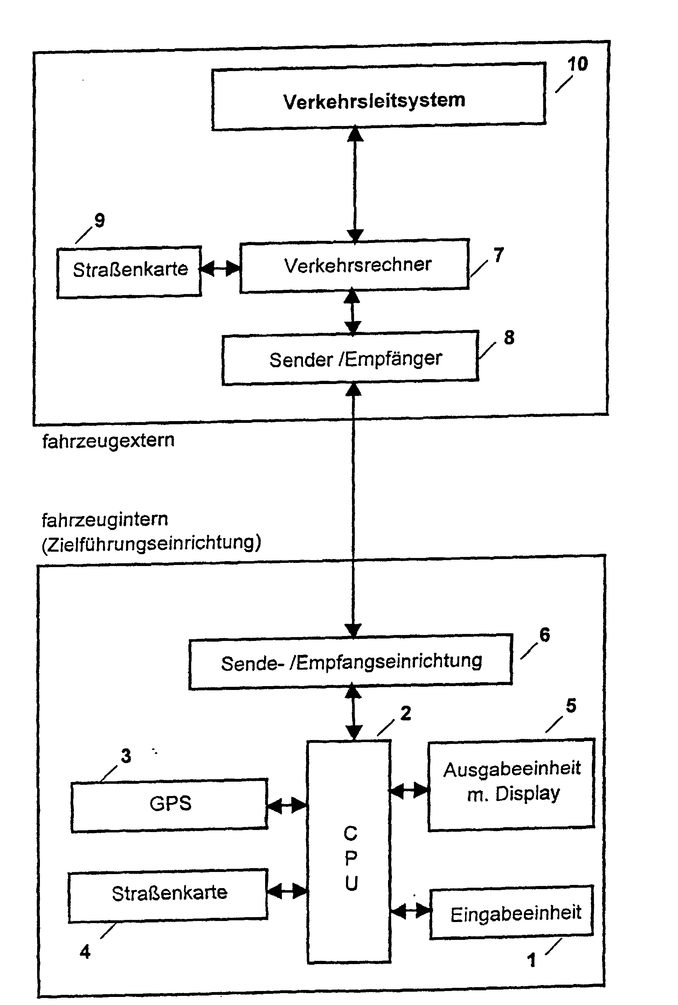

Anhand des in der einzigen Figur dargestellten Systems zur zur Zielführung eines Fahrzeugs unter Berücksichtigung aktueller und/oder prognostizierter Verkehrsdaten wird die Erfindung nachfolgend näher erläutert.

Die Figur zeigt schematisch eine fahrzeuginterne Zielführungseinrichtung, die eine Eingabeeinheit 1 insbesondere zur Eingabe einer Zielposition mittels einer Tastatur umfaßt; die Eingabeeinheit 1 ist datentechnisch mit einer Recheneinheit (CPU) 2 verbunden. Weiter weist die Zielführungseinrichtung eine Empfangseinheit für drahtlos übermittelte Informationen zur Erkennung der aktuellen geographischen Position auf, z.B. einen GPS-Empfänger 3 (Global Positioning System) für die Satelliten-Navigation. Alternativ kann auch ein Funkpeilsystem vorgesehen sein. Die aktuelle geographische Position des Fahrzeugs ist aus den empfangenen Zeitsignalen des GPS-Empfängers 3 bestimmbar, wobei der GPS-Empfänger 3 vorzugsweise zum Empfang von Korrektursignalen eingerichtet ist, mit denen die Genauigkeit der Positionserkennung verbessert werden kann. Zur Bestimmung der aktuellen geographischen Position des Fahrzeugs aus den empfangenen Zeitsignalen des GPS-Empfängers 3 ist auch der GPS-Empfänger 3 mit der Recheneinheit (CPU) 2 verbunden. Die Recheneinheit (CPU) 2 hat außerdem Zugriff auf eine digitalisierte Straßenkarte 4, die z.B. auf einer CD-ROM abgespeichert ist. Die CD-ROM enthält das gesamte Straßennetz der Bundesrepublik Deutschland: alle Autobahnen, Bundes-, Landes- und Kreisstraßen, alle Großstädte mit sämtlichen befahrbaren Straßen und Plätzen. Anhand der geographischen Daten auf der CD-ROM kann die Recheneinheit (CPU) 2 völlig unabhängig von anderen fahrzeugexternen Systemen eine oder mehrere Fahrtrouten ermitteln, die die aktuelle geographische Position des Fahrzeugs und die Zielposition miteinander verbindet. Die Fahrhinweise (Wegführungsinformationen) für den Fahrer. werden über eine mit der Recheneinheit (CPU) 2 verbundene Ausgabeeinheit 5 ausgegeben. Die Ausgabeeinheit 5 umfaßt ein Display sowie eine Sprachausgabeeinrichtung. Bei Bedarf ist auf dem Display die aktuelle Position mit einer Umgebungskarte anzeigbar. In einer speziellen Ausführungsform ist Ausgabeeinheit gleichzeitig als Eingabeeinheit ausgebildet ist, wobei die Eingabe insbesondere der Zielposition durch Markieren oder handschriftliche Eingabe auf dem Display erfolgen kann. Zur Kommunikation mit externen Einrichtungen ist die Recheneinheit (CPU) 2 mit einer Sende- /Empfangseinrichtung 6 versehen, welche zweckmäßig als Funktelefon ausgebildet ist.

Über die Sende- /Empfangseinrichtung 6 ist die Zielführungseinrichtung des Fahrzeugs mit einem extern angeordneten Verkehrsrechner 7 datentechnisch verbindbar. Zum Datenaustausch mit den zielgeführten Fahrzeugen ist der Verkehrsrechner 7 mit einem Sender/Empfänger 8 verbunden. Die Fahrtroutenbestimmung durch den Verkehrsrechner 7 auf Anforderung durch das Fahrzeug erfolgt anhand mindestens einer gespeicherten digitalisierten Straßenkarte 9, auf die der Verkehrsrechner 7 direkten Zugriff hat. Der Verkehrsrechner 7 ist Bestandteil eines Verkehrsleitsystems 10 oder an dieses angeschlossen. Über das Verkehrsleitsystem 10 stehen dem Verkehrsrechner 7 die aktuellen und/oder prognostizierten Verkehrsdaten zur Verfügung. Es ist aber auch vorgesehen, daß der Verkehrsrechner 7 nicht nur Zugriff auf die Verkehrsdaten des Verkehrsleitsystems 10 hat, sondern daß die Routenplanung in direkter Abstimmung mit der Verkehrsleitung des Verkehrsleitsystems 10 erfolgt.

Zur Zielführung eines Fahrzeugs wird zunächst die Zielposition über die Eingabeeinheit 1 vom Fahrer des Fahrzeugs eingegeben. Die Startposition ist die aktuelle geographische Position, die die Recheneinheit (CPU) 2 durch Abfrage vom GPS-Empfänger 3 erhält. Die Start- und die Zielposition werden anschließend mittels Funktelefon (Sende- /Empfangseinrichtung 6) an den Verkehrsrechner 7 übertragen. Soll mehr als eine Fahrtroute vom Verkehrsrechner 7 ermittelt werden, wird die Anzahl der zu ermittelnden alternativen Fahrtrouten vom Fahrzeug vorgegeben; soll der Verkehrsrechner 7 die Fahrtrouten in Abhängigkeit von vom Fahrzeug vorgebbaren Optimierungsbedingungen bestimmen, werden die Optimierungsbedingungen ebenfalls übermittelt. So ist es z.B. möglich, daß die Fahrtrouten unabhängig von den Kosten wie Autobahngebühren usw., allein unter dem Gesichtspunkt einer minimalen. Fahrzeit, bestimmt werden sollen. Hat der Verkehrsrechner 7 die Aufgabe erhalten, nur eine einzige Fahrtroute zu ermitteln, so bestimmt der Verkehrsrechner 7 anhand der digitalisierten Straßenkarte 9 genau eine (möglichst günstige) Fahrtroute, die die aktuelle geographische Position mit der Zielposition verbindet. Dabei werden die aktuellen und/oder prognostizierten Verkehrsdaten berücksichtigt. Der Verkehrsrechner 7 ermittelt auf Basis der zur Verfügung stehenden Verkehrsdaten von den möglichen Fahrtrouten beispielsweise die mit der kürzesten Fahrzeit, die das Fahrzeug für die gesamte Fahrtroute benötigt, indem er die mittlere Geschwindigkeit der Fahrzeuge auf den einzelnen Straßenabschnitten der Fahrtrouten berücksichtigt. Anschließend wird die vollständige Fahrtroute an das Fahrzeug übertragen. Zusätzlich zur ermittelten Fahrtroute kann es auch vorgesehen sein, daß der Verkehrsrechner mit der Fahrtroute eine im Bereich der Fahrtroute aktualisierte Straßenkarte an das Fahrzeug überträgt. Die zu übertragende Datenmenge ist in einem solchen Fall sehr gering, da nur ein kleiner Ausschnit der gesamten Straßenkarte 9 an das Fahrzeug zu übertragen ist. Auch ist es alternativ möglich, daß die Straßenkarte im aktualisierten Bereich zusammen mit aktuellen und/oder prognostizierten Verkehrsdaten übertragen wird. Zweckmäßigerweise wird die Fahrtroute als Vektorzug in Form von aufeinanderfolgenden Wegpunkten vom Verkehrsrechner an das Fahrzeug übermittelt; dadurch verringert sich einerseits die zu übertragende Datenmenge, andererseits vereinfacht der Vektorzug die Zielführung des Fahrzeugs. Die Datenübertragung an das zielgeführte Fahrzeug erfolgt mittels eines Funktelefons (Sender/Empfänger 8).

Die vollständige Fahrtroute wird von der Sende- /Empfangseinrichtung 6 empfangen: anhand der digitalisierten Straßenkarte 4 erfolgt anschließend die Zielführung des Fahrzeugs durch die im Fahrzeug installierte Zielführungseinrichtung. Dazu erhält der Fahrer in Abhängigkeit von der aktuellen Position des Fahrzeugs die entsprechenden Fahrhinweise über Lautsprecher mitgeteilt. Zusätzlich werden auf dem Display die Fahrhinweise der Ausgabeeinheit 5 optisch angezeigt. Welches die nächste Richtungsänderung ist, ermittelt die Zielführungseinrichtung durch Vergleich der aktuellen Position mit der Fahrtroute anhand der digitalisierten Straßenkarte 4. Die Zielführung erfolgt im Fahrzeug durch einen Bordcomputer (Recheneinheit 2), der auch den Datenaustausch mit dem Verkehrsrechner 7 steuert.

Kommt es auf der Fahrtroute z.B. zu einem Unfall, kann also die Fahrtroute nur noch mit sehr geringer Fahrgeschwindigkeit passiert werden, wird von dem Verkehrsrechner 7 selbständig oder auf Anforderung eine aktualisierte Fahrtroute ermittelt und an das Fahrzeug übertragen. Das zielgeführte Fahrzeug verfügt also immer über die optimale Fahrtroute. Abweichungen von der vorgegebenen Fahrtroute sind jederzeit korrigierbar, da das Fahrzeug über eine autonome Zielführungseinrichtung verfügt. Somit ist es also auch möglich, den Fahrer des Fahrzeugs zur Fahrtroute zurückzuführen, wenn dieser sich trotz der Fahrhinweise verfahren hat oder wenn eine Verkehrsstörung vorliegt, die dem Verkehrsrechner 7 nicht bekannt war. In letzterem Falle ist die Zielführungseinrichtung auch von sich aus in der Lage, die Verkehrsstörung zu umfahren.

In einer zweiten Ausführungsform bestimmt die Recheneinheit (CPU) 2 anhand der digitalisierten Straßenkarte 4 nach Eingabe der Zielposition mehrere alternative Fahrtrouten, die an den externen Verkehrsrechner übertragen werden. Der Verkehrsrechner 7 wählt dann unter Berücksichtigung der aktuellen und/oder prognostizierten Verkehrsdaten aus den übermittelten Fahrtrouten diejenige aus, die unter Berücksichtigung der aktuellen Verkehrslage den Standardbedingungen oder den vorgegebenen Bedingungen am besten entspricht, und übermittelt das Ergebnis an das zielgeführte Fahrzeug. Im Einzelfall ist es auch möglich, daß nur eine einzige Fahrtroute an den Verkehrsrechner 7 übermittelt wird und daß dieser beispielsweise die Gesamtfahrzeit unter Berücksichtigung der aktuellen und/oder prognostizierten Verkehrsdaten bestimmt.

In einer dritten Ausführungsform ist es vorgesehen, daß alle Fahrzeuge einer organisatorischen Einheit, z.B. eines Taxiunternehmens, ihre Fahrtrouten vom Verkehrsrechner 7 unter Berücksichtigung der aktuellen und/oder prognostizierten Verkehrsdaten ermittelt bekommen, wobei zusätzlich organisatorische Anforderungen z.B. des Taxiunternehmens berücksichtigt werden. Die organisatorischen Anforderungen könnten z.B. darin bestehen, daß die Fahrtrouten der einzelnen Fahrzeuge möglichst gleichmäßig über die Stadt verteilt sein sollen usw.

## Patentansprüche

1. Verfahren zur Zielführung eines Fahrzeugs, bei dem mindestens eine Fahrtroute, die von einer Startposition zu einer vorgegebenen Zielposition führt, unter Berücksichtigung aktueller und/oder prognostizierter Verkehrsdaten ermittelt und das Fahrzeug durch eine mitgeführte Zielführungseinrichtung anhand einer mitgeführten digitalisierten Straßenkarte entlang einer der Fahrtrouten zur Zielposition geführt wird,
**dadurch gekennzeichnet,**
**dass** aus dem Fahrzeug Planungsdaten, die mindestens die Startposition und die Zielposition umfassen, an einen externen Verkehrsrechner übertragen werden und der Verkehrsrechner unter vorgebbaren Randbedingungen und unter Berücksichtigung der aktuellen und/oder prognostizierten Verkehrsdaten Fahrtroutendaten mindestens einer Fahrtroute ermittelt und an die Zielführungseinrichtung des Fahrzeugs überträgt, und dass der Verkehrsrechner bei Eintritt bestimmter Bedingungen mindestens eine aktualisierte günstige Fahrtroute ermittelt und mit den Fahrtrouten jeweils eine im Bereich der Fahrtrouten aktualisierte Straßenkarte an das Fahrzeug überträgt, wobei die Zielführungseinrichtung die nächste Richtungsänderung durch Vergleich der aktuellen Position mit der Fahrtroute anhand der digitalisierten Straßenkarte ermittelt.

2. Verfahren nach Anspruch 1,
**dadurch gekennzeichnet,**
**dass** die an den externen Verkehrsrechner übertragenen Planungsdaten als Startposition die aktuelle geographische Position umfassen.

3. Verfahren nach Anspruch 1 oder 2,
**dadurch gekennzeichnet,**
**dass** die an den externen Verkehrsrechner übertragenen Planungsdaten im Fahrzeug ermittelte Fahrtrouten sind.

4. Verfahren nach einem der Ansprüche 1 bis 3,
**dadurch gekennzeichnet,**
**daß** die Anzahl der vom Verkehrsrechner zu ermittelnden alternativen günstigen Fahrtrouten vom Fahrzeug vorgegeben wird.

5. Verfahren nach einem der Ansprüche 1 bis 4,
**dadurch gekennzeichnet,**
**dass** der Verkehrsrechner die Fahrtrouten in Abhängigkeit von vom Fahrzeug vorgebbaren Randbedingungen bestimmt.

6. Verfahren nach Anspruch 1,
**dadurch gekennzeichnet,**
**dass** die Straßenkarte im aktualisierten Bereich zusammen mit aktuellen und/oder prognostizierten Verkehrsdaten übertragen wird.

7. Verfahren nach einem der Ansprüche 1 bis 6,
**dadurch gekennzeichnet,**
**dass** die aktuellen und/oder prognostizierten Verkehrsdaten die mittlere Geschwindigkeit der Fahrzeuge auf den Straßenabschnitten der Fahrtroute umfassen.

8. Verfahren nach einem der Ansprüche 1 bis 7,
**dadurch gekennzeichnet,**
**dass** die Fahrtroute als Vektorzug in Form von aufeinanderfolgenden Wegpunkten vom Verkehrsrechner an das Fahrzeug übermittelt wird.

9. Verfahren nach einem der Ansprüche 1 bis 8,
**dadurch gekennzeichnet,**
**dass** die vorgebbare Randbedingung die kleinste Fahrzeit ist, die das Fahrzeug für die gesamte Fahrtroute benötigt,

10. Verfahren nach einem der Ansprüche 1 bis 9,
**dadurch gekennzeichnet,**
**dass** der Datenaustausch mit dem Verkehrsrechner über ein Funktelefon erfolgt.

11. Verfahren nach einem der Ansprüche 1 bis 10,
**dadurch gekennzeichnet,**
**dass** die Zielführung im Fahrzeug durch einen Bordcomputer durchgeführt wird.

12. Verfahren nach einem der Ansprüche 1 bis 11,
**dadurch gekennzeichnet,**
**dass** der Verkehrsrechner mit einem Verkehrsleitsystem verbunden ist.

13. Verfahren nach einem der Ansprüche 1 bis 12,
**dadurch gekennzeichnet,**
**dass** die aktuelle geographischen Position durch ein Satelliten-Navigations-System im Fahrzeug ermittelt wird.

14. Verfahren nach einem der Ansprüche 1 bis 13,
**dadurch gekennzeichnet,**
**dass** die aktuelle geographische Position durch ein Funkpeilsystem ermittelt wird.

15. System zur Zielführung eines Fahrzeugs zur Durchführung des Verfahrens nach Anspruch 1,
bestehend aus einer fahrzeugintemen Zielführungseinrichtung mit
- einer Empfangseinheit (3) für drahtlos übermittelte Informationen zur Erkennung der aktuellen geographischen Position,
- einer Recheneinheit (CPU) (2) zur Steuerung der internen und externen Datenübertragungen,
- einer Eingabeeinheit (1) insbesondere zur Eingabe einer Zielposition und
- einer Ausgabeeinheit (5) insbesondere zur Ausgabe von Wegführungsinformationen, wobei die Ausgabeeinheit (5) ein Display aufweist und auf dem Display (5) die aktuelle Position mit einer Umgebungskarte anzeigbar ist, und einem außerhalb des Fahrzeugs angeordneten Verkehrsrechner (7), der eine digitalisierte Straßenkarte (9) mit den aktuellen und/oder prognostizierten Verkehrsdaten aufweist,
wobei die Zielführungseinrichtung zusätzlich mit einer Sende/Empfangseinrichtung (6) ausgebildet und jederzeit über die Sende-/Empfangseinrichtung (6) drahtlos mit dem Verkehrsrechner (7) datentechnisch verbindbar ist, um die vom Verkehrsrechner ermittelten Falstrontendaten zu empfangen, wobei die Zielführungseinrichtung die nächste Richtungsänderung durch Vergleich der aktuellen Position mit der Falstronte anhand der digitalisierten Straßenkarte ermittelt.

16. System nach Anspruch 15,
**dadurch gekennzeichnet,**
**dass** die Empfangseinheit (3) für drahtlos übermittelte Informationen zur Erkennung der aktuellen geographischen Position ein Funkpeilsystem ist.

17. System nach einem der Ansprüche 15 oder 16,
**dadurch gekennzeichnet,**
**dass** die Empfangseinheit (3) für drahtlos übermittelte Informationen zur Erkennung der aktuellen geographischen Position ein Satelliten-Navigationssystem ist.

18. System nach Anspruch 17,
**dadurch gekennzeichnet,**
**dass** die Empfangseinheit (3) zum Empfang von Korrektursignalen eingerichtet ist, mit denen die Genauigkeit der Positionserkennung verbessert werden kann.

19. System nach einem der Ansprüche 15 bis 18,
**dadurch gekennzeichnet,**
**dass** die Ausgabe- (5) und/oder Eingabeeinheit (1) eine Spracheingabe- und/oder Sprachausgabeeinheit aufweist.

20. System nach einem der Ansprüche 16 bis 19,
**dadurch gekennzeichnet,**
**dass** die Ausgabeeinheit (5) gleichzeitig als Eingabeeinheit (1) ausgebildet ist, wobei die Eingabe insbesondere der Zielposition durch Markieren oder handschriftliche Eingabe auf dem Display (5) erfolgen kann.

21. System nach einem der Ansprüche 16 bis 20,
**dadurch gekennzeichnet,**
**dass** die Sende- /Empfangseinrichtung (6) als Funktelefon ausgebildet ist.

## Claims

1. Method for guiding a vehicle to a destination, in which at least one route leading from a starting position to a predetermined target position is established on the basis of current and/or forecast traffic data, and the vehicle is guided along one of the routes to the target position by an onboard guidance device by means of an onboard digitalised road map
**characterised in that**
planning data incorporating at least the starting position and the target position are passed from the vehicle to an external traffic computer, and the traffic computer establishes, subject to predeterminable constraints and on the basis of the current and/or forecast traffic data, route data for at least one route, and transmits this to the guidance device of the vehicle; and that the traffic computer establishes - when certain conditions occur - at least one updated valid route and transmits to the vehicle, together with the routes, in each case a road map which has been updated in the area of the route, the guidance device establishing the next change of direction by comparing the current position with the route on the basis of the digitalised road map.

2. Method as in Claim 1,
**characterised in that**
the planning data transmitted to the external traffic computer include the current geographical position as the starting position.

3. Method as in Claim 1 or 2,
**characterised in that**
the planning data transmitted to the external traffic computer are routes established in the vehicle.

4. Method as in one of Claims 1 to 3,
**characterised in that**
the number of alternative valid routes to be established by the traffic computer is predetermined by the vehicle.

5. Method as in one of Claims 1 to 4,
**characterised in that**
the traffic computer determines the routes in dependence on the constraints predetermined by the vehicle.

6. Method as in Claim 1,
**characterised in that**
the road map in the updated area is transmitted together with current and/or forecast traffic data.

7. Method as in one of Claims 1 to 6,
**characterised in that**
the current and/or forecast traffic data incorporate the average speed of the vehicles on the sections of the roads covered by the route.

8. Method as in one of Claims 1 to 7,
**characterised in that**
the route is transmitted from the traffic computer to the vehicle as a vector characteristic in the form of successive route points.

9. Method as in one of Claims 1 to 8,
**characterised in that**
the predeterminable constraint is the shortest journey time which the vehicle requires for the entire route.

10. Method as in one of Claims 1 to 9,
**characterised in that**
the exchange of data with the traffic computer is carried out by means of a mobile telephone.

11. Method as in one of Claims 1 to 10,
**characterised in that**
the guidance process is carried out in the vehicle by means of an onboard computer.

12. Method as in one of Claims 1 to 11,
**characterised in that**
the traffic computer is linked to a traffic control system.

13. Method as in one of Claims 1 to 12,
**characterised in that**
the current geographical position is established by means of a satellite navigation system in the vehicle.

14. Method as in one of Claims 1 to 13,
**characterised in that**
the current geographical position is established by means of a radio direction finding system.

15. System for guiding a vehicle to a destination by implementing the method as in Claim 1,
consisting of an onboard guidance unit having
- a receiver unit (3) for information transmitted wirelessly for the identification of the current geographical position,
- a computer unit (CPU) (2) to control the internal and external transmissions of data,
- an input unit (1), especially for entering a target position, and
- an output unit (5), especially for issuing route guidance information, the output unit (5) having a display on which may be displayed the current position by means of a map of the area, and
a traffic computer (7) outside the vehicle, which has a digitalised road map (9) showing current and/or forecast traffic data,
the guidance device being additionally fitted with a transmitter/receiver unit (6) and can at any time be linked wirelessly, in terms of data transmission, by means of this transmitter/receiver unit (6) with the traffic computer (7), in order to receive the route data established by the traffic computer, the guidance device establishing the next change of direction by comparing the current position with the route on the basis of the digitalised road map.

16. System as in Claim 15,
**characterised in that**
the receiver unit (3) for information transmitted wirelessly for the purpose of identifying the current geographical position is a radio direction finding system.

17. System as in one of Claims 15 or 16,
**characterised in that**
the receiver unit (3) for information transmitted wirelessly for the purpose of identifying the current geographical position is a satellite navigation system.

18. System as in Claim 17,
**characterised in that**
the receiver unit (3) is set up to receive correction signals by which the accuracy of the position identification can be increased.

19. System as in one of Claims 15 to 18,
**characterised in that**
the output unit (5) and/or input unit (1) have/has a voice input and/or voice output unit.

20. System as in one of Claims 16 to 19,
**characterised in that**
the output unit (5) is such that it acts as an input unit (1) at the same time, where input, particularly of the target position, can be effected by marking or handwritten input on the display (5).

21. System as one of Claims 16 to 20,
**characterised in that**
the transmitter/receiver unit (6) is in the form of a mobile telephone.

## Revendications

1. Procédé de guidage d'un véhicule à destination, dans lequel au moins un itinéraire, qui mène d'une position de départ à une position de destination prédéterminée, est déterminé en tenant compte de données de circulation réelles et/ou prévues, et le véhicule est guidé le long d'un des itinéraires vers la position de destination par un dispositif de guidage à destination embarqué au moyen d'une carte routière numérisée embarquée,
**caractérisé en ce que** des données de planification provenant du véhicule, qui comprennent au moins la position de départ et la position de destination, sont transmises à un ordinateur de trafic externe et **en ce que** l'ordinateur de trafic détermine, dans des conditions supplémentaires pouvant être prédéfinies, et en tenant compte des données de circulation réelles et/ou prévues, des données d'itinéraire d'au moins un itinéraire, et les transmet au dispositif de guidage à destination du véhicule, et **en ce que** l'ordinateur de trafic, en cas de survenue de conditions déterminées, détermine au moins un itinéraire favorable actualisé et transmet au véhicule, avec les itinéraires, une carte routière actualisée dans la zone des itinéraires, le dispositif de guidage à destination déterminant le changement de direction suivant par comparaison de la position réelle avec l'itinéraire au moyen de la carte routière numérisée.

2. Procédé selon la revendication 1,
**caractérisé en ce que** les données de planification transmises à l'ordinateur de trafic externe comprennent en tant que position de départ la position géographique réelle.

3. Procédé selon la revendication 1 ou 2,
**caractérisé en ce que** les données de planification transmises à l'ordinateur de trafic externe sont des itinéraires déterminés dans le véhicule.

4. Procédé selon l'une des revendications 1 à 3,
**caractérisé en ce que** le nombre des itinéraires alternatifs favorables à déterminer par l'ordinateur de trafic est prédéfini par le véhicule.

5. Procédé selon l'une des revendications 1 à 4,
**caractérisé en ce que** l'ordinateur de trafic détermine les itinéraires en fonction de conditions supplémentaires pouvant être prédéfinies par le véhicule.

6. Procédé selon la revendication 1,
**caractérisé en ce que** la carte routière dans la zone actualisée est transmise avec les données de circulation réelles et/ou prévues.

7. Procédé selon l'une des revendications 1 à 6,
**caractérisé en ce que** les données de circulation réelles et/ou prévues comportent la vitesse moyenne des véhicules sur les tronçons routiers de l'itinéraire.

8. Procédé selon l'une des revendications 1 à 7,
**caractérisé en ce que** l'itinéraire est transmis au véhicule par l'ordinateur de trafic en tant que parcours vectoriel sous la forme de points de trajet successifs.

9. Procédé selon l'une des revendications 1 à 8,
**caractérisé en ce que** la condition supplémentaire pouvant être prédéfinie est le temps de trajet le plus court nécessaire au véhicule pour parcourir l'ensemble de l'itinéraire.

10. Procédé selon l'une des revendications 1 à 9,
**caractérisé en ce que** l'échange de données avec l'ordinateur de trafic se fait au moyen d'un radiotéléphone.

11. Procédé selon l'une des revendications 1 à 10,
**caractérisé en ce que** le guidage à destination est réalisé dans le véhicule au moyen d'un ordinateur de bord.

12. Procédé selon l'une des revendications 1 à 11,
**caractérisé en ce que** l'ordinateur de trafic est relié à un système de guidage routier.

13. Procédé selon l'une des revendications 1 à 12,
**caractérisé en ce que** la position géographique réelle est déterminée dans le véhicule par un système de navigation par satellite.

14. Procédé selon l'une des revendications 1 à 13,
**caractérisé en ce que** la position géographique réelle est déterminée par un système radiogoniométrique.

15. Système de guidage d'un véhicule à destination pour la mise en oeuvre du procédé selon la revendication 1,
composé d'un dispositif de guidage à destination interne au véhicule qui comprend :
- une unité de réception (3) pour informations transmises sans fil à des fins d'identification de la position géographique réelle,
- une unité de calcul (CPU) (2) permettant de commander les transmissions de données vers l'extérieur et vers l'intérieur,
- une unité d'entrée (1), en particulier pour l'entrée d'une position de destination, et
- une unité de sortie (5), en particulier pour la sortie d'informations de guidage routier, l'unité de sortie (5) présentant un écran et la position réelle pouvant être affichée sur l'écran (5) avec une carte des environs, et un ordinateur de trafic (7) disposé à l'extérieur du véhicule, qui présente une carte routière numérisée (9) avec les données de circulation réelles et/ou prévues,
le dispositif de guidage à destination étant de plus réalisé avec un dispositif émetteur/récepteur (6) et pouvant à tout moment être relié sans fil par informatique à l'ordinateur de trafic (7) par le dispositif émetteur/récepteur (6) pour recevoir les données d'itinéraire déterminées par l'ordinateur de trafic, le dispositif de guidage à destination déterminant le changement de direction suivant par comparaison de la position réelle avec l'itinéraire au moyen de la carte routière numérisée.

16. Système selon la revendication 15,
**caractérisé en ce que** l'unité de réception (3) pour informations transmises sans fil à des fins d'identification de la position géographique réelle est un système radiogoniométrique.

17. Système selon l'une des revendications 15 ou 16,
**caractérisé en ce que** l'unité de réception (3) pour informations transmises sans fil à des fins d'identification de la position géographique réelle est un système de navigation par satellite.

18. Système selon la revendication 17,
**caractérisé en ce que** l'unité de réception (3) est conçue pour recevoir des signaux de correction grâce auxquels il est possible d'améliorer la précision de l'identification de position.

19. Système selon l'une des revendications 15 à 18,
**caractérisé en ce que** l'unité de sortie (5) et/ou l'unité d'entrée (1) comporte(nt) une unité vocale d'entrée et/ou de sortie.

20. Système selon l'une des revendications 16 à 19,
**caractérisé en ce que** l'unité de sortie (5) est conçue en même temps en tant qu'unité d'entrée (1), l'entrée en particulier de la position de destination se faisant par marquage ou entrée manuelle sur l'écran (5).

21. Système selon l'une des revendications 16 à 20,
**caractérisé en ce que** le dispositif émetteur/récepteur (6) est conçu en tant que radiotéléphone.
